# FASCICULE DE BREVET EUROPEEN

(11) **EP 3 277 941 B1**
(45) Date de publication et mention de la délivrance du brevet: **20.02.2019**
(21) Numéro de dépôt: 16718428.2
(22) Date de dépôt: 31.03.2016
(51) Int. Cl.: F02C 7/22, F02C 9/32, F15C 1/02, F15C 1/16, G05D 7/01

(54) **LIMITEUR DE DÉBIT**
DURCHFLUSSBEGRENZER
FLOW LIMITER

(30) Priorité: 03.04.2015 FR 1552882
(43) Date de publication de la demande: 07.02.2018
(73) Titulaire: Safran Helicopter Engines, 64510 Bordes (FR)
(72) Inventeur: FALGAREIRO, Damien, 77550 Moissy-Cramayel (FR); BARITEAU, Elisa, 77550 Moissy-Cramayel (FR); THORY, Elise, 77550 Moissy-Cramayel (FR); RIZZO, Pascal, 77550 Moissy-Cramayel (FR); LONGIN, Alexis, 77550 Moissy-Cramayel (FR)
(74) Mandataire: Regimbeau
(86) Numéro de dépôt international: PCT/FR2016/050717
(87) Numéro de publication internationale: WO 2016/156740

(56) Documents cités:
- AT-B- 207 642
- US-A- 3 983 903
- US-A1- 2010 163 651

## Description

### DOMAINE TECHNIQUE GENERAL ET ETAT DE LA TECHNIQUE

L'invention concerne les dispositifs limiteur de débit de fluide et notamment ceux installés dans un moteur d'une turbomachine d'un aéronef.

Les limiteurs de débit sont classiquement utilisés pour limiter et donc contrôler un fluide prélevé depuis un circuit principal.

On connait du document US 3 323 550 un limiteur de débit constitué d'une succession de gicleurs obtenus via des plaques à rainures orientées. Ces plaques sont superposées et liées entre elles.

Les documents US3983903 et AT207642 divulguent des limiteurs de débit de l'art antérieur.

Un problème avec ces solutions est qu'elles nécessitent plusieurs pièces qui doivent être assemblées in-situ bien souvent manuellement.

En outre, ces solutions comprennent des zones de rétention qui peuvent engendrer des problèmes de cokéfaction dans ces zones.

### PRESENTATION DE L'INVENTION

L'invention propose de pallier au moins un de ces inconvénients.

A cet effet, l'invention propose un limiteur de débit comprenant un corps comprenant une entrée de fluide et une sortie de fluide ; corps dans lequel est disposé un conduit de circulation du fluide comprenant une succession de chambres de sections différentes en connexion avec l'entrée de fluide d'une part et la sortie de fluide d'autre part, le conduit étant de forme générale tubulaire, le conduit ayant un fond présentant une courbe régulière de manière à ce que le conduit ne présente pas de zone(s) de rétention du fluide en circulation dans le conduit. Le conduit est une succession d'ensembles comprenant chacun : une chambre principale cylindrique ayant une première section suivie d'une première chambre secondaire et d'un gicleur cylindrique ayant une seconde section suivi d'une seconde chambre secondaire. La chambre principale, le gicleur, les première et seconde chambres secondaires partagent une génératrice commune de manière telle que le fond du conduit est une courbe régulière hélicoïdale.

L'invention est avantageusement complétée par les caractéristiques suivantes, prises seules ou en une quelconque de leur combinaison techniquement possible.

Le limiteur est obtenu par un procédé de fabrication par fabrication additive.

Le procédé de fabrication additive est du type fusion laser d'une poudre.

La poudre est de préférence métallique, typiquement Hastelloy X, à base de nickel ou d'aluminium, type AS7G06.

Le conduit est en forme d'hélice.

La première chambre secondaire est de forme tronconique et est convergente dans le sens de circulation du fluide, la seconde chambre secondaire est de forme tronconique et est divergente dans le sens de circulation du fluide.

Le limiteur comprend une crépine en connexion avec l'entrée de fluide disposée en aval de l'entrée de fluide dans le sens de circulation du fluide.

Le limiteur comprend une crépine en connexion avec la sortie de fluide disposée en amont de la sortie de fluide dans le sens de circulation du fluide.

L'invention concerne également un circuit carburant d'un turbomoteur d'aéronef comprenant au moins un limiteur de débit selon l'invention.

Sur l'ensemble des figures, les éléments similaires portent des références identiques.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre une vue d'ensemble d'un limiteur de débit selon un premier mode de réalisation ;
- La figure 2 illustre une vue d'ensemble d'un limiteur de débit selon un second mode de réalisation ;
- La figure 3 illustre une vue de l'entrée du limiteur de débit ;
- La figure 4 illustre une vue de la sortie du limiteur de débit ;
- La figure 5 illustre une vue du conduit du limiteur de débit ;
- La figure 6 illustre une vue d'ensemble d'un dispositif de fabrication d'un limiteur de débit.

Sur l'ensemble des figures, les éléments similaires portent des références identiques.

### DESCRIPTION DETAILLEE DE L'INVENTION

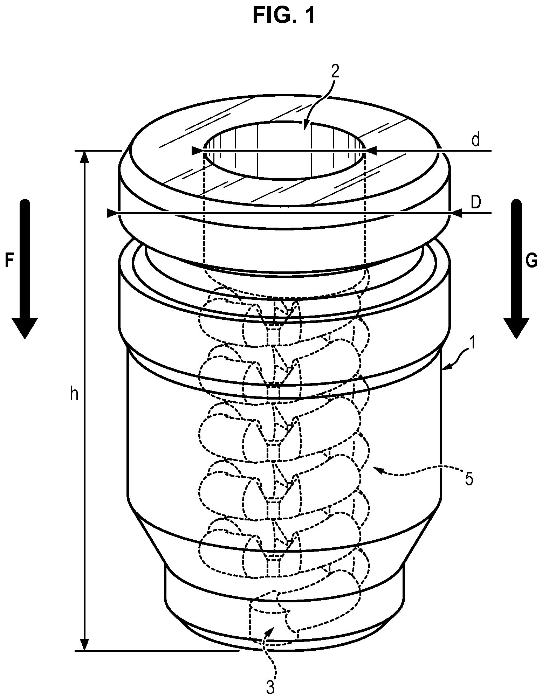

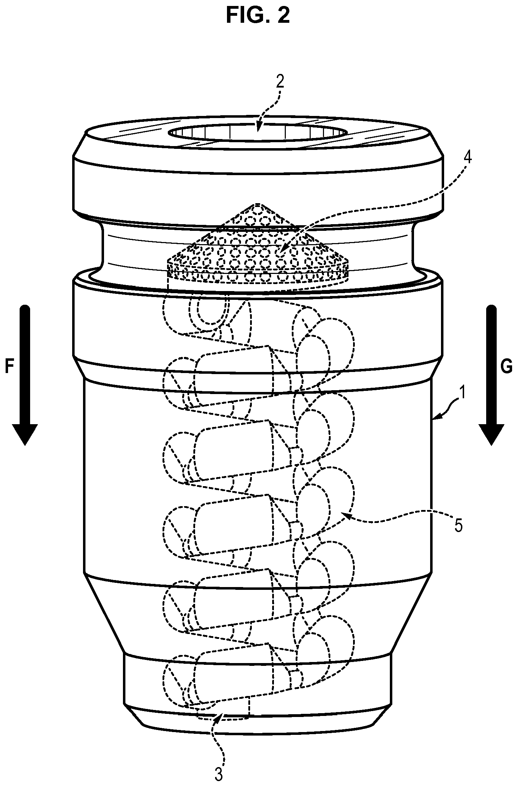

Les **figures 1** et **2** illustrent un limiteur de débit comprenant un corps 1 comprenant une entrée 2 de fluide et une sortie 3 de fluide.

Un fluide entrant dans le limiteur circule de l'entrée 2 vers la sortie 3 (flèche F sur les figures 1 et 2).

Le corps 1 est de forme généralement cylindrique ou tronconique avec une surface extérieure qui n'est pas forcément régulière.

L'entrée 2 est constituée par un cylindre disposé dans le corps 1 et est en connexion fluidique avec un conduit 5.

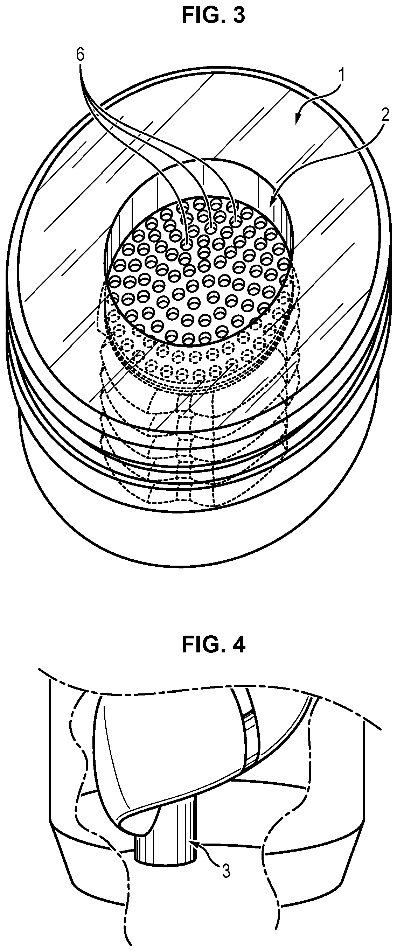

De manière avantageuse, une crépine 4 est disposée directement en aval de l'entrée 2 du limiteur dans le sens de circulation du fluide (voir la **figure 3**). Il s'agit d'une grille disposée en entrée 2, la crépine 4 étant en connexion fluidique avec le conduit 5.

La crépine 4 permet de filtrer le fluide entrant pour éviter que des impuretés ne pénètrent dans le conduit 5 situé en aval de la crépine 4.

De manière alternative ou complémentaire la crépine 4 peut être disposée à la sortie 3 du limiteur (non représenté).

La crépine 4 est de préférence en forme de cône comprenant plusieurs évidements 6 de préférence de taille identique. D'autres formes sont toutefois envisageables.

En outre, selon un mode de réalisation (non représenté) on peut prévoir une crépine en entrée du limiteur et une crépine en sortie du limiteur.

On note toutefois que la présence de la crépine 4 n'est pas obligatoire.

Le conduit 5 est disposé dans le corps 1 entre l'entrée 2 et la sortie 3 (voir les figures 1 et 2 et la **figure 4**) et est de forme générale tubulaire et possède un fond présentant une courbe régulière de manière à ce que le conduit 5 ne présente pas de zone(s) de rétention du fluide en circulation dans le conduit 5.

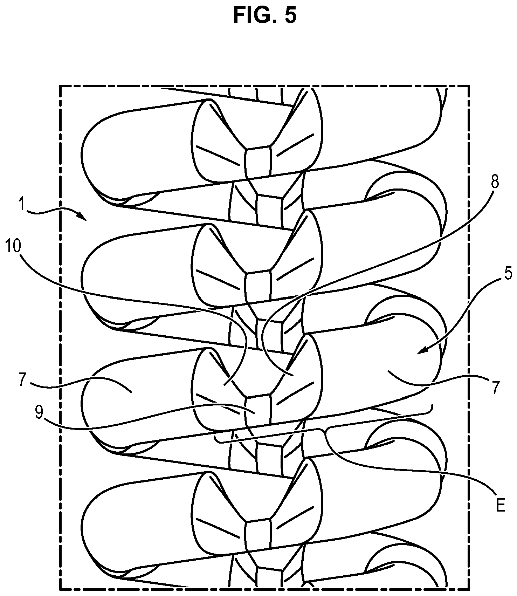

Le conduit 5 comprend une succession de chambres 7, 8, 9, 10 de sections différentes (voir la **figure 5**).

En particulier, il s'agit d'une succession de gicleur 9 disposés entre des chambres principales 7 de section plus grande, les gicleurs 9 étant connectés avec les chambres principales 7 par l'intermédiaire de chambres secondaires 8, 10 de forme tronconique, de forme convergente pour celle en amont du gicleur 9, dans le sens de circulation du fluide et de forme divergente pour celle en aval du gicleur 9 , dans le sens de circulation du fluide.

La succession de gicleurs permet de fournir un composant équivalent à un gicleur unique de petite section de passage, en diminuant le risque de colmatage (particule de pollution qui peut boucher un petit gicleur mais passe librement à travers des sections de passage plus grandes) et en diminuant la sensibilité à l'aération/cavitation du fluide qui le traverse. Le conduit 5 est de préférence en forme d'hélice circulaire (voir la **figure 5**).

La forme en hélice du conduit permet d'avoir plus de gicleurs que s'il était droit dans un encombrement donné. Le rayon de l'hélice dépend de la taille du corps 1 et de la section des chambres du conduit 5.

Le conduit 5 présente donc une pente qui permet la circulation du fluide dans le limiteur. En outre, le limiteur est orienté de manière telle que la gravité (flèche G sur les figures 1 et 2) garantisse l'absence de point mort bas, c'est-à-dire des zones du conduit qui pourraient conduire à une rétention du fluide en circulation dans le conduit.

En particulier, le conduit 5 est une succession d'ensembles E comprenant chacun : une chambre principale 7 cylindrique ayant une première section, suivie d'une chambre secondaire 8 et d'un gicleur 9 cylindrique ayant une seconde section, suivi d'une seconde chambre 10 secondaire. La première chambre secondaire et la seconde chambre secondaire sont de forme tronconique. Comme précédemment décrit, la première chambre secondaire est de forme tronconique, de forme convergente pour celle en amont du gicleur 9, dans le sens de circulation du fluide et de forme divergente pour celle en aval du gicleur 9, dans le sens de circulation du fluide.

En outre, la chambre principale, les première et seconde chambres secondaires et le gicleur partagent une génératrice commune de manière telle que le fond du conduit est une courbe régulière hélicoïdale.

Les gicleurs 9 comme cela est clairement illustré sur la figure 5 sont situés en partie basse. En outre, entre les différentes chambres il y a toujours une pente régulière sans changement ni rupture de celle-ci. Ainsi, le fond du conduit 5 est toujours continu.

De cette façon, au niveau des gicleurs 9 il n'y a pas de zone de rétention qui peuvent provoquer un phénomène de cokéfaction dans le conduit 5.

En relation à nouveau avec la figure 1, le limiteur de débit présente un diamètre extérieur du conduit D compris entre 10 et 20 mm, un diamètre interne d compris entre 5 et 10 mm et une hauteur h comprise entre 15 et 30 mm.

Le limiteur ci-dessus décrit est de préférence obtenu au moyen d'un procédé de fabrication par ajout de matière, fabrication additive, type fusion sélective par laser d'une poudre.

La poudre est de préférence métallique, typiquement Hastelloy X, à base de nickel ou d'aluminium, type AS7G06. La poudre peut être également composée de plastique.

Le Laser, qui est un faisceau de haute énergie permet de fusionner la poudre localement dans le but de construire la pièce couche par couche.

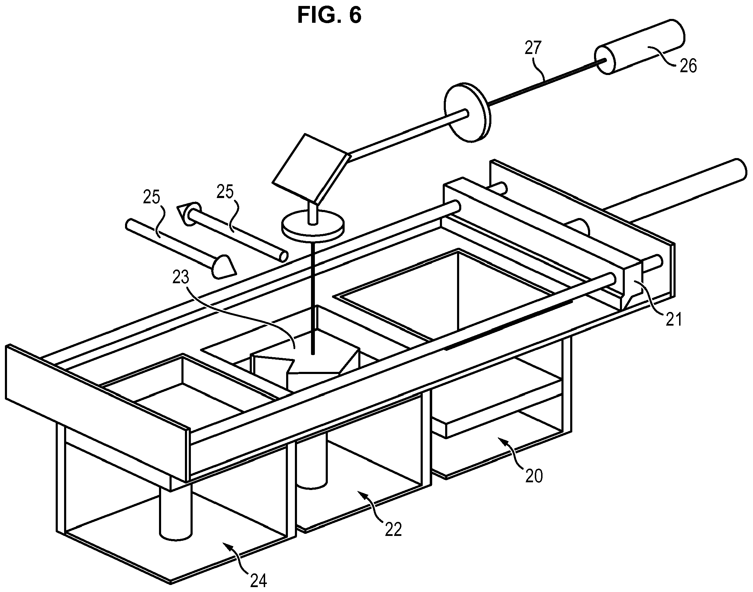

La **figure 6** illustre un dispositif de fabrication par ajout de matière additive type fusion sélective par laser d'une poudre.

Le dispositif comprend un bac d'alimentation 20 de poudre qui est mobile, un système 21 d'étalement du lit de poudre amène la poudre vers une plateforme de construction 22 mobile qui monte au fur et à mesure que la pièce 23 (le limiteur) est fabriquée. Un bac de récupération 24 de la poudre permet de récupérer la poudre non utilisée.

La fabrication s'effectue sous atmosphère contrôlée pour permettre la fusion laser. Pour ce faire, le dispositif de fabrication comprend un système 25 de contrôle de l'atmosphère.

En outre, le dispositif de fabrication comprend une source laser 26 et un système optique 27 qui permet d'amener le faisceau laser vers la plateforme 22 de construction.

Dans le cadre de ce procédé (voir la **figure 6**), la pièce 23 est fabriquée par une succession de couches de dizaines de microns. Une source d'énergie 26, type laser, fusionne les couches de poudre une à une de façon sélective suivant le modèle 3D conçu.

Ce procédé permet de fabriquer des pièces ne pouvant pas être réalisées par enlèvement de matière.

Grâce à ce procédé, les divers éléments constituant le limiteur ne sont pas constitués d'un assemblage complexe qui dans tous les cas serait perfectible et pourrait provoquer des imprécisions d'assemblages et par conséquent créer des ruptures de pente dans le conduit notamment.

La fabrication additive permet de générer le limiteur au fur et à mesure en faisant croître la structure du limiteur.

Ainsi, toutes les problématiques d'usinage de différentes pièces nécessaires à la structure du limiteur sont résolues.

## Revendications

1. Limiteur de débit comprenant un corps (1) comprenant une entrée (2) de fluide et une sortie (3) de fluide ; corps (1) dans lequel est disposé un conduit (5) de circulation du fluide comprenant une succession de chambres de sections différentes en connexion avec l'entrée (2) de fluide d'une part et la sortie (3) de fluide d'autre part, le conduit (5) étant de forme générale tubulaire, **caractérisé en ce que** le conduit (5) a un fond présentant une courbe régulière de manière à ce que le conduit (5) ne présente pas de zone(s) de rétention du fluide en circulation dans le conduit (5), le conduit (5) étant une succession d'ensembles (E) comprenant chacun : une chambre principale (7) cylindrique ayant une première section suivie d'une première chambre secondaire (8) et d'un gicleur (9) cylindrique ayant une seconde section suivi d'une seconde chambre secondaire (10), la chambre principale, le gicleur, les première et seconde chambres secondaires partageant une génératrice commune de manière telle que le fond du conduit est une courbe régulière hélicoïdale.

2. Limiteur de débit selon la revendication 1, dans lequel la première chambre secondaire est de forme tronconique et est convergente dans le sens de circulation du fluide, la seconde chambre secondaire est de forme tronconique et est divergente dans le sens de circulation du fluide.

3. Limiteur de débit selon l'une des revendications précédentes, comprenant une crépine (4) en connexion avec l'entrée (2) de fluide disposée en aval de l'entrée de fluide dans le sens de circulation du fluide.

4. Limiteur de débit selon l'une des revendications précédentes, comprenant une crépine (4) en connexion avec la sortie (3) de fluide disposée en amont de la sortie de fluide dans le sens de circulation du fluide.

5. Procédé de fabrication d'un limiteur de débit selon l'une des revendications 1 à 4, **caractérisé en ce que** ledit limiteur de débit est fabriqué par fabrication additive.

6. Procédé de fabrication selon la revendication 5, dans lequel la fabrication additive est du type fusion laser d'une poudre.

7. Procédé de fabrication selon la revendication 6, dans lequel la poudre est de préférence métallique, typiquement Hastelloy X, à base de nickel ou d'aluminium, type AS7G06.

8. Circuit carburant d'un turbomoteur d'aéronef comprenant au moins un limiteur de débit selon l'une des revendications 1 à 4.

## Patentansprüche

1. Durchflussbegrenzer, der einen Körper (1) umfasst, der einen Fluideingang (2) und einen Fluidausgang (3) umfasst; wobei in dem Körper (1) eine Leitung (5) für den Umlauf des Fluids angeordnet ist, die eine Folge von Kammern mit unterschiedlichen Querschnitten umfasst, die mit dem Fluideingang (2) einerseits und dem Fluidausgang (3) andererseits verbunden sind, wobei die Leitung (5) allgemein röhrenförmig ist, **dadurch gekennzeichnet, dass** die Leitung (5) einen Boden aufweist, der eine gleichmäßige Krümmung aufweist, derart, dass die Leitung (5) keine Zone/n zum Zurückhalten des sich in der Leitung (5) im Umlauf befindlichen Fluids aufweist, wobei die Leitung (5) eine Folge von Baugruppen (E) ist, die jeweils Folgendes umfassen: eine zylindrische Hauptkammer (7), die einen ersten Querschnitt aufweist, gefolgt von einer ersten Nebenkammer (8) und einer zylindrischen Düse (9), die einen zweiten Querschnitt aufweist, gefolgt von einer zweiten Nebenkammer (10), wobei die Hauptkammer, die Düse, die erste und die zweite Nebenkammer einen gemeinsamen Generator teilen, derart, dass der Boden der Leitung eine schraubenförmige gleichmäßige Kurve ist.

2. Durchflussbegrenzer nach Anspruch 1, wobei die erste Nebenkammer eine kegelstumpfartige Form aufweist und in der Umlaufrichtung des Fluids zusammenläuft, wobei die zweite Nebenkammer eine kegelstumpfartige Form aufweist und in der Umlaufrichtung des Fluids auseinander geht.

3. Durchflussbegrenzer nach einem der vorhergehenden Ansprüche, der ein Sieb (4) umfasst, das mit dem Fluideingang (2) verbunden ist und dem Fluideingang in der Umlaufrichtung des Fluids nachgeschaltet angeordnet ist.

4. Durchflussbegrenzer nach einem der vorhergehenden Ansprüche, der ein Sieb (4) umfasst, das mit dem Fluidausgang (3) verbunden ist und dem Fluidausgang in der Umlaufrichtung des Fluids vorgeschaltet angeordnet ist.

5. Verfahren zur Herstellung eines Durchflussbegrenzers nach einem der Ansprüche 1 bis 4, **dadurch gekennzeichnet, dass** der Durchflussbegrenzer durch Additivherstellung hergestellt wird.

6. Herstellungsverfahren nach Anspruch 5, wobei die Additivherstellung vom Typ Laserfusion eines Pulvers ist.

7. Herstellungsverfahren nach Anspruch 6, wobei das Pulver vorzugsweise metallisch, typischerweise Hastelloy X, auf Nickel- oder Aluminiumbasis, vom Typ AS7G06, ist.

8. Kraftstoffkreislauf eines Luftfahrzeug-Turbomotors, der mindestens einen Durchflussbegrenzer nach einem der Ansprüche 1 bis 4 umfasst.

## Claims

1. A flow limiter comprising a body (1) comprising a fluid inlet (2) and a fluid outlet (3); body (1) in which a fluid circulation duct (5) is arranged, comprising a succession of chambers having different sections in connection with the fluid inlet (2) on the one hand, and with the fluid outlet (3) on the other hand, the duct (5) being of generally tubular shape, **characterized in that** the duct (5) has a bottom with a smooth curve such that the duct (5) does not have areas(s) for retaining the fluid that circulates in the duct (5), the duct (5) being a succession of assemblies (E) each comprising: a main cylindrical chamber (7) having a first section followed by a first secondary chamber (8) and by a cylindrical jet (9) having a second section followed a second secondary chamber (10), the main chamber, the jet, the first and second secondary chambers sharing a common generator such that the bottom of the duct is a smooth helical curve.

2. The flow limiter according to claim 1, wherein the first secondary chamber has a truncated cone shape and is convergent in the direction of circulation of the fluid, the second secondary chamber has a truncated cone shape and is divergent in the direction of circulation of the fluid.

3. The flow limiter according to any one of the preceding claims, comprising a strainer (4) in connection with the fluid inlet (2), arranged downstream of the fluid inlet in the direction of circulation of the fluid.

4. The flow limiter according to any one of the preceding claims, comprising a strainer (4) in connection with the fluid outlet (3), arranged upstream of the fluid outlet in the direction of circulation of the fluid.

5. A method for manufacturing a flow limiter according to any one of claims 1 to 4, **characterized in that** said flow limiter is manufactured by additive manufacturing.

6. The manufacturing method according to claim 5, wherein the additive manufacturing is of the laser powder fusion type.

7. The manufacturing method according to claim 6, wherein the powder is preferably metallic, typically Hastelloy X, nickel-based or aluminum-based, of the type AS7G06.

8. A fuel system of an aircraft turbine engine comprising at least one flow limiter according to any one of claims 1 to 4.
